(19) Europäisches Patentamt
European Patent Office
Office européen des brevets

(11) **EP 2 237 450 A1**

(12) **EUROPEAN PATENT APPLICATION**

(43) Date of publication:
06.10.2010 Bulletin 2010/40

(51) Int Cl.:
*H04B 7/06* (2006.01)    *H04B 7/08* (2006.01)

(21) Application number: 09305272.8

(22) Date of filing: **31.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Alcatel Lucent**
**75008 Paris (FR)**

(72) Inventors:
• **Chen, Yejian**
**70191, Stuttgart (DE)**

• **Halbauer, Hardy**
**76275, Ettlingen (DE)**
• **Schaepperle, Joerg**
**70180, Stuttgart (DE)**

(74) Representative: **Wetzel, Emmanuelle et al**
**Alcatel Lucent**
**Intellectual Property & Corporate Standards**
**Lorenzstrasse 10**
**70435 Stuttgart (DE)**

(54) **Method for selecting a detection mode at a receiver of a radio communication network, and corresponding receiver and transmitter**

(57) The present invention relates to a method for selecting a detection mode at a receiver belonging to a radio communication network, said receiver supporting at least two detection modes, a linear detection mode, and a non linear detection mode.

According to the present invention, the method comprises the steps of:
- determining a channel quality at said receiver,
- if said channel quality is lower than a first predefined threshold, switching from said linear detection mode to said non linear detection mode.

Fig. 4

**Description**

## BACKGROUND OF THE INVENTION

The present invention relates to a method for selecting a detection mode at a receiver of a radio communication network.

In current and future radio communication network a critical aspect is to increase the throughput on the air interface in order to reach high bit rate adapted to support services as video streaming, real time data exchange...

To reach this objective several methods are known to allocate resources efficiently and especially reuse resources as much as possible so that a single resource is used simultaneously by different users. In this context, it is crucial to cope with interference produced due to the resource reuse and evaluate in which situation a resource reuse makes sense because keeping the channel quality at an acceptable level and in which situation a resource reuse would cause a so high interference that a proper reception of the data is excluded.

Mechanisms as beamforming or MIMO help to go in the direction of higher resource reuse since a spatial separation of the users can be taken into account to further avoid interference on the air interface. These mechanisms introduce a further dimension to the resource allocation algorithm since in addition to time, frequency, code, the position of the users can be taken into consideration to allocate efficient resources.

A particular object of the present invention is to provide a solution even in case users are no more being sufficiently spatially separated to use common detection algorithms at the receiver while guarantying an acceptable computation complexity at the receiver.

Another object of the invention is to provide a receiver and a transmitter adapted to be used to solve the above mentioned problem.

## SUMMARY OF THE INVENTION

These objects, and others that appear below, are achieved by a method for selecting a detection mode at a receiver belonging to a radio communication network according to claim 1, a receiver adapted to be used in a radio communication network according to claim 11, and a transmitter adapted to be used in a radio communication network according to claim 13.

According to the present invention, a switching mechanism is foreseen between a linear common detection mode and a non linear detection mode, the criterion for switching depending on a channel quality indication, the switching towards a non linear detection mode being triggered if the channel quality indication is lower than a first predefined threshold.

In a preferred embodiment of the present invention, the transmission mode used further depends on the channel quality indication, in case the non linear detection mode needs to be used at the receiver, the transmitter further determine if it should use a multi-user transmission mode in that at least one resource is shared between at least two users or if it should switch towards a single user transmission mode in which two users are allocated distinct resources.

According to another aspect of the present invention, in order to force the system longer in a non linear detection mode, power control or code rate adaptation are used in the system.

This presents the advantage of enlarging the spectrum of situations where a multi-user transmission mode is used in the radio communication network and hence increasing the throughput on the air interface .

Another advantage of this algorithm consists in decreasing the number of switching events between the multi-user MIMO mode and single user mode. This relaxes the scheduling signaling and can more effectively make use of the radio resource.

Further advantageous features of the invention are defined in the dependent claims.

## BRIEF DESCRIPTION OF THE DRAWINGS

Other characteristics and advantages of the invention will appear on reading the following description of a preferred embodiment given by way of non-limiting illustrations, and from the accompanying drawings, in which:

- Figure 1 shows a prior art configuration for scheduling transmission and decoding transmission in a radio communication network.
- Figure 2 shows a configuration for scheduling transmission and decoding transmission according to the present invention.
- Figure 3 shows a configuration where power control is used according to the present invention.
- Figure 4 shows a flow diagram of an implementation of the method according to the present invention.
- Figure 5 shows an implementation of a receiver according to the present invention.

- Figure 6 shows an implementation of a transmitter according to the present invention.

**DETAILED DESCRIPTION OF THE INVENTION**

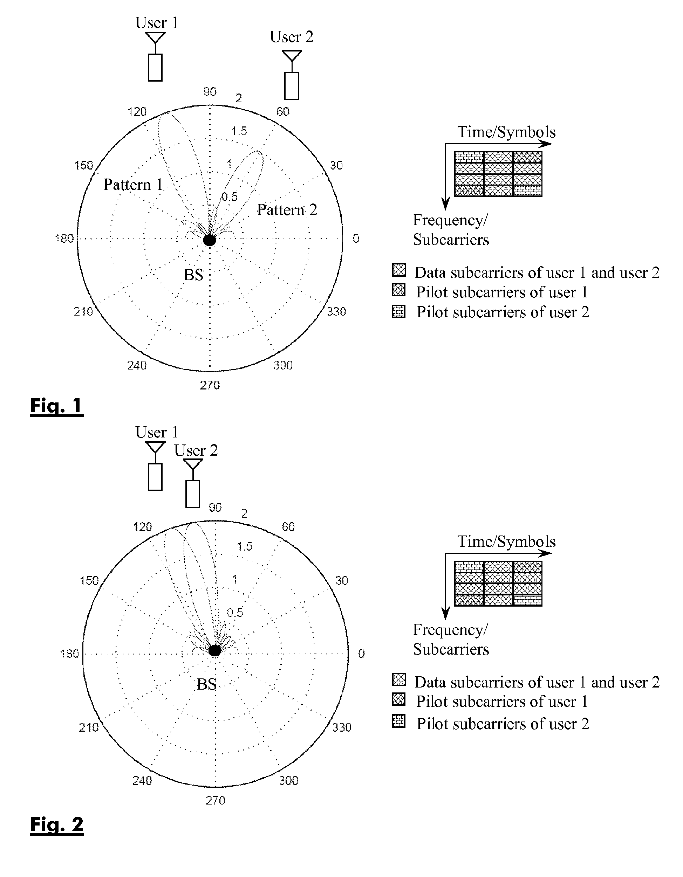

Figure 1 shows a prior art configuration for scheduling transmission and decoding transmission in a radio communication network. In this configuration, 2 terminals user1, and user 2 are exchanging data with a base station BS using a multi-user transmission mode, eg Multi user MIMO. The terminals are in distinct directions seen from the perspective of the base station BS, user 1 is in the direction of pattern 1 at about 110˚ angle from the reference 0˚ and user 2 is in the direction of pattern 2 at about 60˚ from reference 0˚. Side lobes with very low amplitude are to be found in addition but appear as noise and do not disturb the decoding of the signals. Decoding of the signal in the uplink as well as in the downlink can conveniently be performed using a usual linear detection algorithm. The BS is preferably equipped with a $\frac{\lambda}{2}$ uniform linear antenna array. Other antenna arrangement as known by persons skilled in the art for being able to decode beamforming signals or MIMO can equally be used.

Since the mobile terminals are spatially separated, and under the condition that the channel quality is sufficient, two orthogonal beam patterns can be placed simultaneously on the same resource i.e. the dedicated user data of user 1 and user 2 are transmitted via the same time and frequency resource. Pilot patterns of user 1 and user 2 are on the contrary preferably not overlapping in the time and frequency domain and help to determine the channel quality. The channel matrix

$$\mathbf{H} = \begin{bmatrix} h_{11} & h_{12} \\ h_{21} & h_{22} \\ \vdots & \vdots \\ h_{N1} & h_{N2} \end{bmatrix} = \begin{bmatrix} \mathbf{h}_1 & \mathbf{h}_2 \end{bmatrix} \qquad (1)$$

can be thus estimated by the pilots of user 1 and user 2 straightforwardly, where N is the number of antennas at BS. In prior art. base station BS deploy any MIMO linear receiver, e.g. Zero Forcing (ZF) receiver or Minimum Mean Square Error (MMSE) receiver, to separate the data streams of user 1 and user 2 respectively.

More generally, the MIMO system can be modeled by **y = Hs + n,** where H is MxN channel matrix (M is the number of RX antenna, N is the number of transmit data streams), s is the Nxl vector for the transmit signal, n is Mxl additive noise vector at the receive, and y is Mxl vector of the receive signal. The idea of linear detection is to find out a NxM weight matrix to deploy the matrix operation $\hat{\mathbf{s}}$ = **Wy** to estimate the signal vector s. The estimation is deployed by simple linear matrix multiplication. Thus the receiver is termed as linear receiver. As shown in the following figure, the antenna pattern toward user 1 and the antenna pattern toward user 2 correspond to two weight vectors W.

Figure 2 shows a configuration where the method according to the present invention can be used. In this case, the mobile terminals have lower spatial separation: both main lobes of the signals are between 100˚ and 110˚ seen from the base station reference 0˚. This causes a decrease of the channel quality experienced at the receiver since both users suffer a lot from the inter-user interference. Thus, the simple linear receiver no more works successfully. According to the present invention, when the channel quality either measured by the base station BS or obtained by uplink reporting decreases below a first predefined threshold, the receiver switches the decoding mode to a non linear detection mode. The non linear detection mode is a more sensitive detection mode which can still decode successfully users scheduled on identical resources although they are no more spatially separated enough for usual decoding algorithms. An example of a non linear detection mode is a successive interference cancellation detection mode.

Preferably, the linear detection and/ or the non linear detection are performed by multi-user detectors in the sense that the detectors are able to detect simultaneously different signals. Preferably, the multi-user detectors are equipped with a multiple antenna arrangement for performing the detection.

Consequently, as long as good channel conditions (channel quality above a first threshold ) with such as high spatial separation or decorrelation of the involved channels is experienced, a linear detection mode is used at the detector, when the channel quality decrease below the first threshold, a more sensitive decoding mode is used at the decoder.

Alternatively, a parallel interference cancellation mode which belongs also to the categories of non linear detection modes receiver or a maximum likelihood detection mode receiver or a multistage successive interference cancellation mode receiver are possible candidates to be used as non linear detection mode detectors in the framework of the present invention.

In the following, the example of the successive interference cancellation detection mode receiver will be detailed. The scope of the invention is nevertheless not restricted to this specific example.

Similarly, and in a preferred embodiment of the present invention, the transmitter also tracks the channel quality. If the channel quality is detected by the transmitter as being no more sufficient to guarantee even a more sensitive detection with a non linear detection mode and the channel quality is below a second quality threshold itself defined below the first quality threshold, then the transmitter selects a transmission mode allocating distinct resources to distinct users into consideration. In this case, the transmitter switches from a multi user transmission mode where allocation of identical resources to different users is possible to a single user transmission mode where the resource allocated to 2 users under consideration are distinct still enabling it for both users to be decoded properly in bad channel conditions.

Alternatively or in addition, the transmitter may switch between different multiuser transmission modes. A first such multi-user transmission mode may be SDMA (spatial division multiple access) which foresees that different users are sharing the same resources (time/frequency) if they are located in sufficiently different directions seen from the base station. Another such multi-user transmission mode may be superposition coding which allocate identical resources (time/frequency) to different users even if they are not separable spatially, in this case, a sufficiently different path loss toward the users simplifies the decoding of their signals in using for example successive interference cancellation.

The switching between transmission modes single user and multi-user transmission modes is preferably adapted to the capacity of the detectors at the receiver side. Consequently, the switching may happen depending on channel quality threshold on the one hand or on signaling feedback from the receiver.

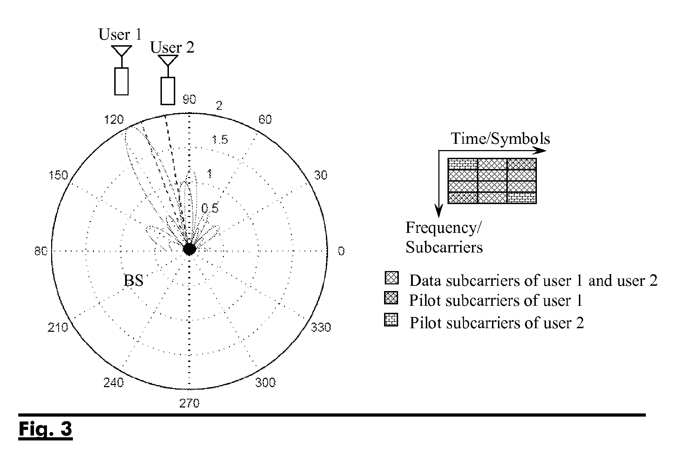

Figure 3 shows a configuration where the decoding according to the present invention further involves power control. In this case, the successive interference cancellation detection mode is used at the receiver as example for non linear detection mode. In this case, the beam pattern shows that the receive power ratio between user 1 and user 2 is equal or above a predefined value for example $10\log_{10}\left(\dfrac{2}{1}\right) \approx 3\mathrm{dB}$ . This difference in term of receive power is one possible condition for the successive interference cancellation mode to be successfully implemented at the receiver even with a single antenna receiver.

In a first embodiment of the present invention, the difference in term of received power is obtained by appropriate user pairing when deciding which users can be allocated identical resources.

Alternatively, the difference in term of received power can be forced, if this is not already the case, by using a power control algorithm to increase the transmit power of one user or decrease the transmit power of the other user or both in order to reach a receive power ratio sufficiently high for the successive interference cancellation detection mode to be used efficiently.

Successive interference cancellation consists in decoding first the user with the higher receive power at the receiver, in figure 3 user 1. Then the corresponding signal component of user 1 is subtracted from the composite received signal which is a superposition of signal from user 1 and user 2. Hence, the signal of user 2 can be detected without the impact of user 1.

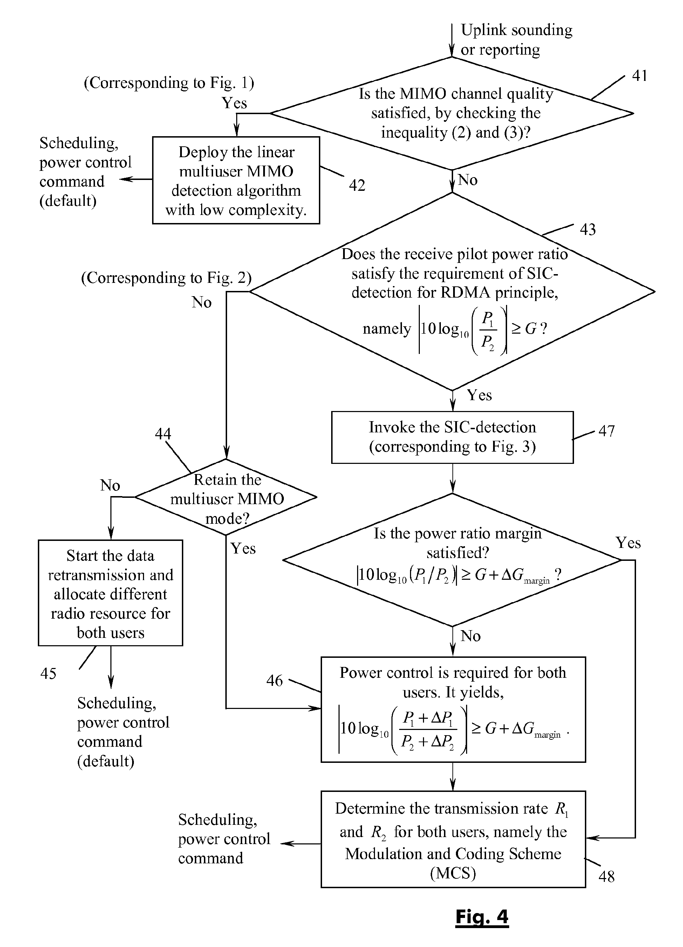

Figure 4 shows a flow diagram of an implementation of the method for selecting a detection mode. The method according to the present invention can be implemented in the uplink as well as in the downlink of a radio communication network.

The uplink direction will be described in more detail in the following:

In step 41, the channel quality is checked against a first threshold. An example for checking the channel quality again a first threshold consists in verifying if inequality (2) or (3) is fulfilled. Inequality (3) is an empirical approach of the problem, while inequality (2) is a more exact approach. It will be understood by those skilled in the art, that other inequalities may be used to reach the same solution.

$$\max\left[\mathrm{eig}(\mathbf{H}^H\mathbf{H})\right] \times \min\left[\mathrm{eig}(\mathbf{H}^H\mathbf{H})\right] \geq \|\mathbf{h}_1\|^2 \cdot \|\mathbf{h}_2\|^2 \tag{2}$$

where operator eig(**A**) stands for vectorization the eigenvalues of matrix **A**.

$$\min\left[\mathrm{eig}(\mathbf{H}^H\mathbf{H})\right]\geq 1 \quad . \tag{3}$$

At step 42, if inequality (2) or (3) holds, the linear detection mode can be used at the receiver.

At step 43 if inequalities (2) or (3) do not hold, the channel quality is too bad for using the linear detection mode successfully. It will then be checked if it is appropriate to switch to a non linear detection mode i.e. a successive interference cancellation mode. For this purpose, one can check if there is a sufficient difference between the receive power of the two users especially by checking if the power ratio is above a predefined threshold as reflected in inequality (4):

$$\left|10\log_{10}\left(\frac{P_1}{P_2}\right)\right|\geq G \quad , \tag{4}$$

where $P_1$ and $P_2$ stands for the average pilot power respectively, and $G$ denotes the minimal required power ratio to guarantee a successful successive interference cancellation mode at the receiver.

At step 43 if inequality (4) is not satisfied:

Step 45 an indication is be sent to the transmitter to use a single user transmission mode in which distinct resources are allocated to the two users under consideration.

Alternatively, it could be possible to further continue to transmit with the multi user mode where both users under consideration are allocated identical resource. For this purpose, at step 46, a power control algorithm is used to artificially create a power ratio high enough for the successive interference cancellation to be used efficiently.

$$\left|10\log_{10}\left(\frac{P_1+\Delta P_1}{P_2+\Delta P_2}\right)\right|\geq G+\Delta G_{\mathrm{margin}} \quad , \tag{5}$$

where $\Delta P_1$ and $\Delta P_2$ stands for the power control step. The power ratio margin is denoted by $\Delta G_{\mathrm{margin}}$ is preferably chosen higher than 0 to protect and prevent the power ratio $G$ from being influenced by the channel variation. On the other side, the margin $\Delta G_{\mathrm{margin}}$ should be considered, even if the inequality (4) is fulfilled.

If inequality (4) is fulfilled, at step 47, the receiver switches to the successive interference cancellation detection mode.

Finally, at step 48, the Modulation and Coding Schemes should be determined for both downlink and uplink transmission. The modulation and Coding scheme determine the transmission rate for both users.

An alternative to obtain a power ratio above a predefined threshold, in order to be able to decode both users using identical resources, consists in selecting transmission rates ( Modulation and Coding Schemes) sufficiently apart from each other for the two users using identical resources being able to be decoded using a non linear decoding algorithm. If the transmission rates are sufficiently apart, the decoding algorithm would start to decode the signal with the highest transmission rate , then subtract this contribution from the composite signal and then finally decode the signal having the lowest transmission rate.

It will be understood by those skilled in the art that, the method of successive interference cancellation, can be similarly used for more than 2 users scheduled on identical resources.

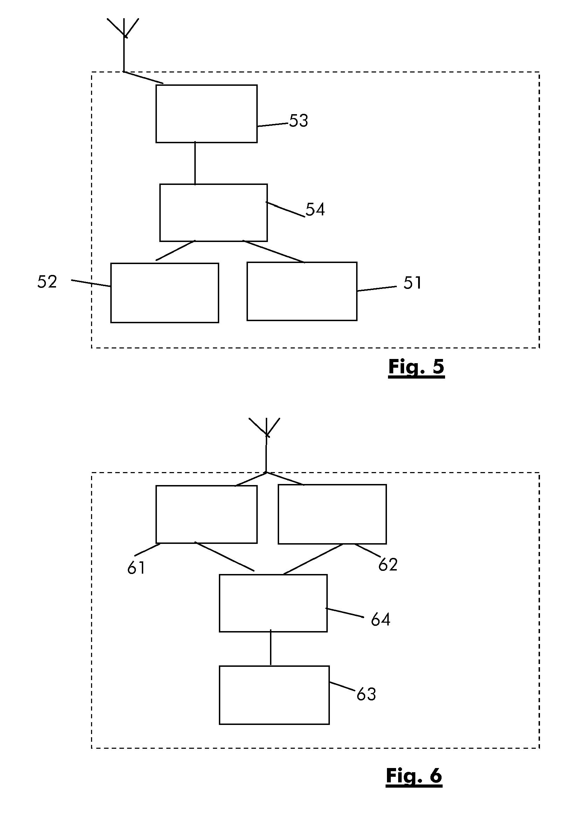

Figure 5 shows a receiver according to the present invention. The receiver is adapted to be used in a radio communication network. The receiver comprises means 51 for performing a linear detection mode and a means 52 for performing a successive interference cancellation detection mode. In addition, the receiver comprises means 53 for determining a channel quality at the receiver, and means 54 for switching from the linear detection mode to the successive interference cancellation detection mode if the channel quality is lower than a first predefined threshold. Mean 53 for determining a channel quality are connected to means 54 for switching between the linear and the successive interference cancellation mode, which is itself connected to both means 51 for performing linear detection and means 52 for performing successive interference detection.

Figure 6 shows a transmitter according to the present invention. The transmitter means 61 for using a first transmission mode in which distinct resources are allocated to distinct users, herein called single-user transmission mode, and means 62 for using a second transmission mode in which at least one resource is shared by at least two users herein called multi-user transmission mode, means 63 for receiving an information related to a channel quality, and means 64 for switching from the multi-user transmission mode to the single user transmission mode if said channel quality is lower than a second predefined threshold lower.

**Claims**

1.  Method for selecting a detection mode at a receiver belonging to a radio communication network, said receiver supporting at least two detection modes, a linear detection mode, and a non linear detection mode, said method comprising the steps of:

    - determining a channel quality at said receiver,
    - if said channel quality is lower than a first predefined threshold, switching from said linear detection mode to said non linear detection mode.

2.  Method according to claim 1, wherein a transmitter supports at least two transmission modes, a first transmission mode in which distinct resources are allocated to distinct users, herein called single-user transmission mode, and a second transmission mode in which at least one resource is shared by at least two users, herein called multi-user transmission mode, said method further comprising the step of:

    - if said channel quality is lower than a second predefined threshold lower than said first predefined threshold, switching from said multi-user transmission mode to said single user transmission mode.

3.  Method according to claim 1, wherein said linear detection mode at the receiver is a zero forcing or minimum mean square error receiver.

4.  Method according to claim 1, wherein said linear detection mode and/or said non linear detection mode are performed by multi-user detectors.

5.  Method according to claim 1, wherein said non linear detection mode consists in a successive interference cancellation detection mode comprising the steps of :

    - Selecting, depending on signal properties of said respective signals, a signal to be decoded first out of a composite radio signal;
    - Decoding said signal to be decoded first according to its signal properties, and
    - Subtracting the contribution of said signal to be decoded first from said composite radio signal.

6.  Method according to claim 1, wherein a transmitter supports at least two transmission modes in which at least one resource is shared by at least two users, a first transmission mode being a spatial division multiple access mode, and a second transmission mode being a superposition coding mode, said method further comprising the step of:

    if said channel quality is lower than a third predefined threshold lower than said first predefined threshold, switching from said spatial division multiple access mode to said superposition coding mode.

7.  Method according to claim 2, wherein said multi-user transmission mode corresponds to Multi-User MIMO and said single user transmission mode corresponds to Single User MIMO or beamforming.

8.  Method according to claim 1, wherein said channel quality depends on the amount of decorrelation or spatial separation of the channels received at said receiver.

9.  Method according to claim 1, wherein said method further comprises a step of activating a power control algorithm when said non linear detection mode is selected.

10. Method according to claim 1, wherein said method further comprises a step of code rate adaptation algorithm when said non linear detection mode is selected.

11. Receiver adapted to be used in a radio communication network for selecting a detection mode at a receiver, said receiver supporting at least two detection modes, a linear detection mode and a non linear detection mode, said receiver further comprising:

- means for determining a channel quality at said receiver,
- means for switching from said linear detection mode to said non linear detection mode if said channel quality is lower than a first predefined threshold.

12. Receiver according to claim 11, being a base station or a terminal of a radio communication network.

13. Transmitter adapted to be used in a radio communication network comprising means for selecting a transmission mode for a signal at a transmitter, said radio communication system comprising at least two transmission modes, a first transmission mode in which distinct resources are allocated to distinct users, herein called single-user transmission mode, and a second transmission mode in which at least one resource is shared by at least two users herein called multi-user transmission mode , said transmitter further comprising:

- means for receiving an information related to a channel quality,
- means switching from said multi-user transmission mode to said single user transmission mode if said channel quality is lower than a second predefined threshold lower.

14. Transmitter according to claim 13, being a base station or a terminal of a radio communication network.

**Fig. 1**

**Fig. 2**

**Fig. 3**

**Fig. 4**

**Fig. 5**

**Fig. 6**

## EUROPEAN SEARCH REPORT

Application Number

EP 09 30 5272

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| X | US 2006/018410 A1 (ONGGOSANUSI EKO N [US] ET AL) 26 January 2006 (2006-01-26) * the whole document * ----- | 1-14 | INV. H04B7/06 H04B7/08 |
| X | KR 2007 0077709 A (SAMSUNG ELECTRONICS CO LTD [KR]) 27 July 2007 (2007-07-27) * the whole document * ----- | 1-14 | |
| X | US 5 757 846 A (VASUDEVAN SUBRAMANIAN [US]) 26 May 1998 (1998-05-26) * the whole document * ----- | 1 | |
| X | EP 1 895 680 A (SAMSUNG ELECTRONICS CO LTD [KR]) 5 March 2008 (2008-03-05) * the whole document * ----- | 2,7,13, 14 | |

TECHNICAL FIELDS SEARCHED (IPC)

H04B

The present search report has been drawn up for all claims

| Place of search | Date of completion of the search | Examiner |
|---|---|---|
| Munich | 26 August 2009 | Martínez Cebollada |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 30 5272

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2009

| Patent document cited in search report | | Publication date | Patent family member(s) | | Publication date |
|---|---|---|---|---|---|
| US 2006018410 | A1 | 26-01-2006 | NONE | | |
| KR 20070077709 | A | 27-07-2007 | NONE | | |
| US 5757846 | A | 26-05-1998 | NONE | | |
| EP 1895680 | A | 05-03-2008 | US | 2008056414 A1 | 06-03-2008 |

EPO FORM P0459

For more details about this annex : see Official Journal of the European Patent Office, No. 12/82